# EUROPÄISCHE PATENTSCHRIFT

(11) **EP 2 465 394 B1**
(45) Veröffentlichungstag und Bekanntmachung des Hinweises auf die Patenterteilung: **19.03.2014**
(21) Anmeldenummer: 11010002.1
(22) Anmeldetag: 20.12.2011
(51) Int. Cl.: A47J 31/08, A47J 45/02, B65D 83/08

(54) **Haltevorrichtung für Filtereinsätze**
Holding device for filter inserts
Dispositif de retenue pour inserts de filtres

(30) Priorität: 20.12.2010 DE 102010055171
(43) Veröffentlichungstag der Anmeldung: 20.06.2012
(73) Patentinhaber: GFM Maschinenbau GmbH, 45739 Oer-Erkenschwick (DE)
(72) Erfinder: Gawarecki, Herbert, 45721 Haltern am See (DE)
(74) Vertreter: Gesthuysen Patent- und Rechtsanwälte

(56) Entgegenhaltungen:
- DE-U1- 29 914 537
- GB-A- 2 168 034
- US-A1- 2006 169 153

## Beschreibung

Die Erfindung betrifft eine Haltevorrichtung für Filtereinsätze. Ferner betrifft die Erfindung auch eine Filtereinsatzverkaufseinheit zur Aufnahme mehrerer der vorgenannten Filtereinsätze, mit mehreren in geschlossener Konfiguration der Filtereinsatzverkaufseinheit die Filtereinsätze umgebenden Wandungen.

Als Filtereinsatz werden aus Papier gefertigte trichterförmige Filter bezeichnet, die zur einmaligen Verwendung bei der Zubereitung von Kaffee dienen. Die im Folgenden beschriebene Erfindung beschränkt sich jedoch nicht allein auf diesen Einsatzbereich, sondern betrifft ebenso beliebig geformte Filterpapiere, beispielsweise runde Filterpapiere, wie sie ebenfalls von der Kaffeezubereitung her bekannt sind aber auch wie sie in chemischen Laboren häufig eingesetzt werden.

Aus dem Stand der Technik bekannte Haltevorrichtungen für Filtereinsätze werden in der Regel mit Schrauben oder vergleichbaren Befestigungsmitteln befestigt oder zum Beispiel in dafür vorgesehene Tragschienen eingehängt. Zusätzlich zu der komplizierten und unflexiblen Befestigungsart weisen bekannte Haltevorrichtungen häufig eine Konstruktionsweise auf, die besonders materialaufwendig und somit kostenintensiv ist. Die GB 2 168 034 A beschreibt eine bekannte Haltevorrichtung.

Damit ist es die Aufgabe der Erfindung, eine Haltevorrichtung für Filtereinsätze anzugeben, die flexibel einsetzbar und kostengünstig ist.

Die zuvor hergeleitete und aufgezeigte Aufgabe ist gelöst durch eine Haltevorrichtung wie in Anspruch 1 definiert. Wenn von der Breite eines Filtereinsatzes die Rede ist, dann wird darunter die größte Erstreckung des Filtereinsatzes mit Blick auf die Flachseite dieses Filtereinsatzes verstanden, wobei die Erstreckungsrichtung dann im wesentlichen parallel zu der Halteöffnung verlaufend verstanden wird.

Dadurch, dass die Halteöffnung eine geringere Breite als die zu haltenden Filtereinsätze aufweist, ist gewährleistet, dass die zu haltenden Filtereinsätze nicht durch die Halteöffnung hindurchrutschen. Es ist ausreichend, wenn die Halteöffnung eine Breite aufweist, die geringer ist als die maximale Breite der Filtereinsätze. Bei "klassisch" geformten Filtereinsätzen, die von der Flachseite betrachtet eine nach unten hin konisch zulaufende Berandung haben, nach unten hin durch eine Schmalseite begrenzt sind und nach oben hin - also im Bereich der Einfüllöffnung - durch eine runde Abschlusskante begrenzt sind, bedeutet dies, dass die Halteöffnung eine geringere Erstreckung aufweist als sie durch die Abmessung des Filtereinsatzes gegeben ist zwischen den beiden Berührpunkten der jeweils seitlich nach unten aufeinander zulaufenden Kanten mit der oberen runden Abschlusskante des Filtereinsatzes.

Gemäß einer vorteilhaften Weiterbildung der Erfindung ist vorgesehen, dass die Rückwand aus Papier, Pappe oder Kunststoff besteht. Diese Materialien ermöglichen eine besonders kostengünstige Fertigung der erfindungsgemäßen Haltevorrichtung, sowohl bezüglich der Materialkosten, als auch im Hinblick auf die Verarbeitung.

Die Erfindung zeichnet sich dadurch aus, dass das Haltelement durch einen teilweise abgetrennten Teil der Rückwand gebildet ist. Durch diese einstückige Ausbildung der erfindungsgemäßen Haltevorrichtung wird die Herstellung weiter vereinfacht und es können unnötige Kosten vermieden werden.

Gemäß einer besonders vorteilhaften Weiterbildung der Erfindung ist vorgesehen, dass das abgetrennte Teil entlang einer Solltrennlinie, insbesondere entlang einer Perforation, durch den Verwender aus der Rückwand teilweise herauslösbar ist. Durch Auftrennen einer Perforation zwischen der restlichen Rückwand und dem Halteelement stellt somit erst der Verwender das Halteelement endgültig her. Hierdurch wird sowohl ein Verfahrensschritt bei der Produktion der Haltevorrichtung eingespart als auch der Bezug des Verwenders zu der erfindungsgemäßen Haltevorrichtung erhöht, da der Verwender selbst bei der Herstellung der Haltevorrichtung mitwirkt. Darüber hinaus lässt sich die Haltevorrichtung vor der Trennung entlang der Solltrennlinie einfacher transportieren, da die Haltevorrichtung in diesem Zustand eine erhöhte Stabilität aufweist.

Bei einer alternativen Ausgestaltung der Erfindung ist vorgesehen, dass das Halteelement als separates Bauteil an der Rückwand befestigt ist. Durch die Ausbildung des Haltelements als separates Bauteil kann das Halteelement insbesondere aus einem anderen Material hergestellt werden, als aus dem Material, aus dem die Rückwand besteht, die den Rest der erfindungsgemäßen Haltevorrichtung bildet. Auch ergibt sich auf diese Weise ein größerer Spielraum für die Form und weitere Ausgestaltung des Halteelements, da das Halteelement unabhängig von der Rückwand herstellbar ist.

Gemäß einer weiteren bevorzugten Ausgestaltung der Erfindung ist vorgesehen, dass die Befestigung durch Kleben, Verschweißen oder Nieten erfolgt ist. Durch derartige Verbindungsarten oder vergleichbare Verbindungsmittel lässt sich das Halteelement kostengünstig und zuverlässig mit der Rückwand verbinden. Des Weiteren ist beispielsweise auch denkbar, dass die Verbindung lösbar ausgestaltet wird, zum Beispiel indem das Halteelement in der Rückwand eingehängt oder mit der Rückwand verklemmt wird.

Darüber hinaus ist es vorteilhaft, wenn das Halteelement aus Papier, Pappe oder Kunststoff besteht. Diese Materialien ermöglichen eine besonders kostengünstige Fertigung des Halteelements, - wie zuvor in anderem Zusammenhang ausgeführt - sowohl bezüglich der Materialkosten, als auch im Hinblick auf die Verarbeitung. Allgemein sind auch weitere Materialien, auch für die Rückwand, denkbar. Beispielsweise eignen sich Metalle ebenfalls zur Herstellung des Haltelements.

Gemäß einer weiteren bevorzugten Weiterbildung der Erfindung ist vorgesehen, dass das Halteelement die Form eines Bügels aufweist. Hierbei ist der Bügel vorzugsweise rechteckig geformt, d. h. er weist beispielsweise zwei kurze Seiten und eine lange Seite auf, wobei die beiden kurzen Seiten die lange Seite mit der Rückwand verbinden und die kurzen Seiten im Wesentlichen senkrecht zur langen Seite verlaufen.

Bei einer vorteilhaften Ausgestaltung der Erfindung ist vorgesehen, dass der Bügel wenigstens im Bereich seiner Verbindungsstelle zur Rückwand beweglich oder flexibel ist. Aufgrund dieser Beweglichkeit oder Flexibilität kann der Bügel von der Rückwand abgewinkelt werden, wodurch sich die Größe der Halteöffnung variieren lässt. Hierdurch kann die Größe der Halteöffnung an die Anzahl der Filtereinsätze in der Haltevorrichtung angepasst werden, so dass bei jedem Füllzustand die Haltevorrichtung den optischen Eindruck erweckt vollständig gefüllt zu sein. Vorteilhafterweise wird durch das Eigengewicht des Halteelements und das zusätzliche Gewicht der gehaltenen Filtereinsätze das Halteelement nach unten bewegt, so dass die Halteöffnung sich hierdurch schließt, d. h. die Haltevorrichtung ist selbstbeklemmend. Darüber hinaus kann auch bedingt durch die Flexibilität des Halteelements ein gewisser Druck auf die Filtereinsätze ausgeübt werden, so dass diese in ihrer Position fixiert werden.

Gemäß einer weiteren vorteilhaften Ausgestaltung der Erfindung ist vorgesehen, dass die Haltevorrichtung wenigstens einen Klebestreifen aufweist, mit dem die Haltevorrichtung an einem geeigneten Untergrund befestigbar ist. Vorzugsweise sind die Klebestreifen zunächst mit einem schützenden und leicht zu entfernenden Schutzstreifen verdeckt. Nach Entfernen des Schutzstreifens kann die erfindungsgemäße Haltevorrichtung auf nahezu beliebige Oberflächen aufgeklebt und zweckgemäß zur Aufbewahrung von Filtereinsätze verwendet werden. Ein weiterer Vorteil ist, dass die Klebestreifen der Haltevorrichtung mehrfach verwendet werden können, d. h. die Haltevorrichtung kann nicht nur einmal an einer Stelle mittels der Klebestreifen fixiert werden, sondern auch wieder abgezogen und an anderer Stelle erneut fixiert werden.

Bei einer anderen Ausgestaltung ist vorgesehen, dass die Rückwand der Haltevorrichtung wenigstens eine Aufhängeausnehmung aufweist, mit der die Haltevorrichtung an einem Befestigungsmittel fixierbar ist.

Bei einer besonders vorteilhaften Ausgestaltung der Erfindung ist vorgesehen, dass die Haltevorrichtung durch Heraustrennen aus der Verpackung einer Filtereinsatzverkaufseinheit herstellbar ist. Diese Ausgestaltung eignet sich insbesondere für, wie üblicherweise, aus Pappe hergestellte Filtereinsatzverkaufseinheiten. Die Haltevorrichtung kann beispielsweise aus der Rückseite oder der Vorderseite der Filtereinsatzverkaufseinheit durch Auftrennen einer Perforation herausgetrennt werden. Durch das Auftrennen einer weiteren Perforation lässt sich im Anschluss das Haltelement herstellen. Ein besonderer Vorteil ist, dass die Filtereinsatzverkaufseinheit bei ihrer Herstellung derart bedruckt werden kann, dass die aus der Filtereinsatzverkaufseinheit herausgelöste Haltevorrichtung auf der Rückwand beispielsweise eine Werbebotschaft, einen Markennamen oder ein dekoratives Motiv aufweist.

Bei einer vorteilhaften Weiterbildung der Erfindung ist vorgesehen, dass die Haltevorrichtung aus einer Folie, insbesondere aus einer Kunststofffolie besteht, wobei die Folie rollbar und/oder zusammenfaltbar ist. Diese Weiterbildung der erfindungsgemäßen Haltevorrichtung ermöglicht einen besonders flexiblen Transport und eine platzsparende Lagerung. In diesem Fall ist es auch möglich und vorteilhaft als Material einen Fliesstoff zu verwenden. Besondere Stabilität lässt sich erreichen durch einen Verbundwerkstoff, insbesondere einen textilen Verbundwerkstoff.

Wie eingangs erwähnt worden ist, betrifft die Erfindung auch eine Filtereinsatzverkaufseinheit, die im Stand der Technik üblicherweise 50 oder auch 100 Filtereinsätze aufnimmt, wobei die die Filtereinsätze umgebenden Wandungen in geschlossener Konfiguration eine geschlossene Pappschachtel bilden, die zumeist an ihrer oberen Seite durch Abheben eines Deckels geöffnet werden kann. Die erfindungsgemäße Filtereinsatzverkaufseinheit zeichnet sich dadurch aus, dass mittels einer Perforation in wenigstens einer Wandung aus der Filtereinsatzverkaufseinheit eine der zuvor geschilderten erfindungsgemäßen Haltevorrichtungen heraustrennbar ist. So lässt sich auf überraschend einfache Art und Weise mit insgesamt nur sehr geringfügigem Mehraufwand eine praktische Haltevorrichtung aus einer bewährten Filtereinsatzverkaufseinheit gewinnen, die für den Verwender einen erheblichen Mehrwert darstellt.

Im Einzelnen gibt es nun eine Vielzahl von Möglichkeiten, die erfindungsgemäße Haltevorrichtung für Filtereinsätze auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch die erfindungsgemäße Haltevorrichtung für Filter- einsätze inklusive mehrerer in die Haltevorrichtung eingesteck- ter Filtereinsätze,
- Fig. 2a - 2i: schematisch die erfindungsgemäße Haltevorrichtung mit ver- schiedenen Formen der Halteöffnung und
- Fig. 3: eine erfindungsgemäße Filtereinsatzverkaufseinheit.

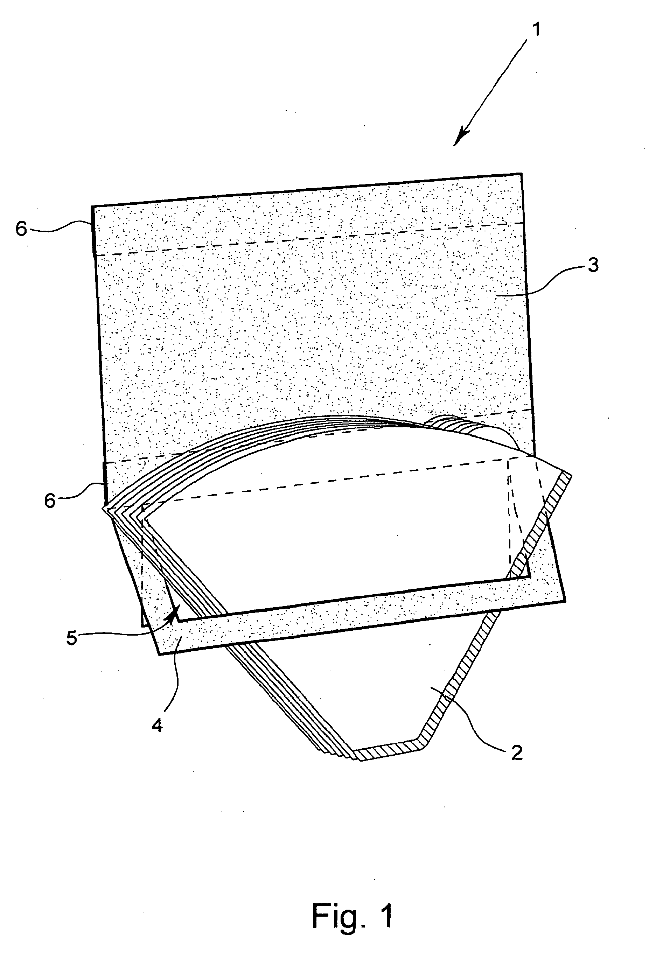

In der Fig. 1 ist eine erfindungsgemäße Haltevorrichtung 1 abgebildet. Mehrere Filtereinsätze 2 sind zwischen einer Rückwand 3 und einem Halteelement 4 angeordnet. Die Rückwand 3 und das Halteelement 4 bilden eine Halteöffnung 5, in der die Filtereinsätze 2 eingesteckt sind. Die Breite der Halteöffnung 5 ist dabei geringer als die Breite der Filtereinsätze 2, so dass die Filtereinsätze 2 nicht durch die Halteöffnung 5 hindurchrutschen können.

Das Halteelement 4 und die Rückwand 2 sind einstückig ausgebildet. Das Halteelement 4 ist in Richtung der Vorderseite der Rückwand 3 abgewinkelt, so dass sich zwischen dem Halteelement 4 und der Rückwand 3 die Halteöffnung 5 erstreckt. Das Material der Rückwand 3 und des Halteelements 4, vorliegend Pappe, ist derart flexibel, dass das Haltelement 4 in seine Ausgangsposition - Planparallelität mit der Rückwand 3 - zurückstrebt und so die Filtereinsätze 2 zwischen dem Haltelement 4 und der Rückwand 3 geringfügig einklemmt. Diese Rückstellwirkung ist bei anderen, hier nicht dargestellten Ausführungsbeispielen nicht gegeben, beispielsweise dann nicht, wenn als Material eine dünne Kunststofffolie verwendet wird.

An der Rückseite der Rückwand 3 sind zwei Klebestreifen 6 angeordnet, mit denen die Haltevorrichtung 1 an einer beliebigen geeigneten Oberfläche lösbar befestigt werden kann.

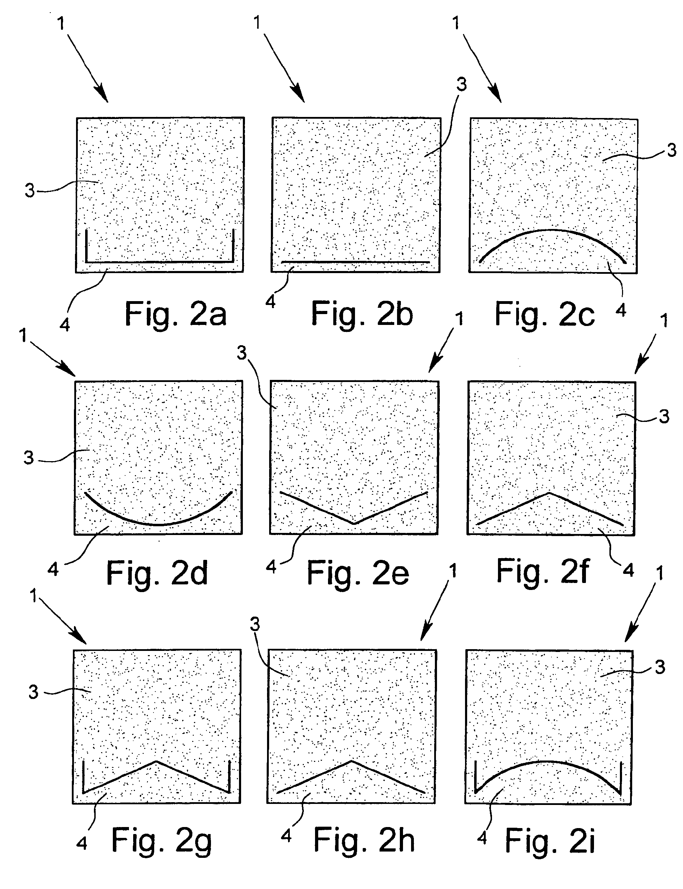

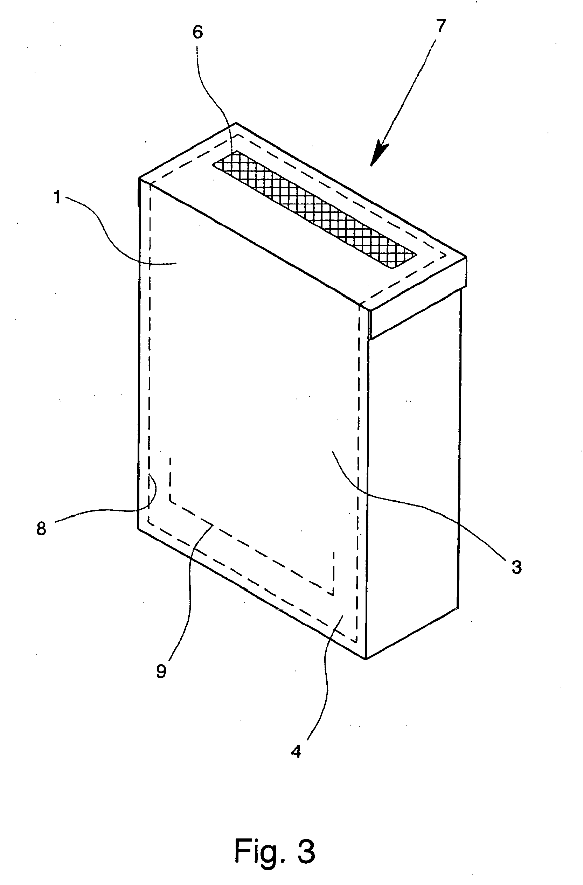

Die Fig. 2a bis 2i zeigen verschiedene Varianten der erfindungsgemäßen Haltevorrichtung 1 ohne Filtereinsätze. Die dargestellten Haltevorrichtungen 1 unterscheiden sich untereinander lediglich in der Formgebung des Halteelements 4 und der Rückwand 3 und damit auch in der sich ausbildenden Halteöffnung 5. Verschiedene Formen des Halteelements 4 lassen sich zur Gestaltung der Haltevorrichtung 1 verwenden, lassen sich folgerichtig aber auch in die Gestaltung einer Filtereinsatzverkaufseinheit 7 (Fig. 3) einbeziehen. So erinnert das Halteelement 4 im Zusammenspiel mit der Rückwand 3 schematisch an die Kontur eines Gesichtes (siehe Fig. 2a - 2i).

Die in den Fig. 2a bis 2i dargestellten Halteelemente 4 sind mittensymmetrisch ausgestaltet. Dies ist jedoch keineswegs zwingend. Asymmetrische Halteelemente sind insbesondere dann gut realisierbar, wenn die Haltevorrichtung mit einem Klebestreifen oder mit zwei oder mehr Aufhängeausnehmungen - hier nicht dargestellt - befestigt ist, weil dann auch eine außermittige Gewichtsverteilung nicht zu einer von der Vertikalen abweichenden Aufhängeposition führt.

In Fig. 3 ist dargestellt, dass die Haltevorrichtung 1 die Rückseite einer Filtereinsatzverkaufseinheit 7 bildet, die mit der restlichen Filtereinsatzverkaufseinheit 7 über eine auftrennbare Perforation 8 verbunden ist. Ebenso sind die Rückwand 3 und das Halteelement 4 in diesem Zustand über eine leicht auftrennbare Perforation 9 verbunden.

Durch entsprechende Bedruckung der Filtereinsatzverkaufseinheit 7 und damit auch der Rückwand 3 und des Haltelements 4 lässt sich dieser Eindruck noch verstärken. Aufgrund des freundlichen Ausdrucks eignen sich besonders die Formgebungen der Fig. 2a, 2d und 2e, ganz besonders der Fig. 2d, für diesen Zweck.

## Patentansprüche

1. Haltevorrichtung (1) für Filtereinsätze (2) mit einer Rückwand (3) und einem Halteelement (4), wobei die Rückwand (3) und das Halteelement (4) eine Halteöffnung (5) bilden, wobei die Halteöffnung (5) eine geringere Breite als die zu haltenden Filtereinsätze (2) aufweist, so dass in die Halteöffnung (5) wenigstens ein Filtereinsatz (2) einsteckbar ist, und dass das Haltelement (4) durch einen teilweise abgetrennten Teil der Rückwand (3) gebildet ist.

2. Haltevorrichtung (1) für Filtereinsätze (2) nach Anspruch 1, **dadurch gekennzeichnet, dass** die Rückwand (3) aus Papier, Pappe oder Kunststoffbesteht.

3. Haltevorrichtung (1) für Filtereinsätze (2) nach Anspruch 2, **dadurch gekennzeichnet, dass** das abgetrennte Teil entlang einer Solltrennlinie, insbesondere entlang einer Perforation, durch den Verwender aus der Rückwand (3) teilweise herauslösbar ist.

4. Haltevorrichtung (1) für Filtereinsätze (2) nach einem der Ansprüche 1 bis 3, **dadurch gekennzeichnet, dass** das Halteelement (4) als separates Bauteil an der Rückwand (3) befestigt ist.

5. Haltevorrichtung (1) für Filtereinsätze (2) nach Anspruch 4, **dadurch gekennzeichnet, dass** die Befestigung durch Kleben, Verschweißen oder Nieten erfolgt ist.

6. Haltevorrichtung (1) für Filtereinsätze (2) nach Anspruch 4 oder 5, **dadurch gekennzeichnet, dass** das Halteelement (4) aus Papier, Pappe oder Kunststoff besteht.

7. Haltevorrichtung (1) für Filtereinsätze (2) nach einem der Ansprüche 1 bis 6, **dadurch gekennzeichnet, dass** das Halteelement (4) die Form eines Bügels aufweist.

8. Haltevorrichtung (1) für Filtereinsätze (2) nach Anspruch 7, **dadurch gekennzeichnet, dass** der Bügel wenigstens im Bereich seiner Verbindungsstelle zur Rückwand (3) beweglich oder flexibel ist.

9. Haltevorrichtung (1) für Filtereinsätze (2) nach einem der Ansprüche 1 bis 8, **dadurch gekennzeichnet, dass** die Haltevorrichtung (1) wenigstens einen Klebestreifen (6) aufweist, mit dem die Haltevorrichtung (1) an einem geeigneten Untergrund befestigbar ist.

10. Haltevorrichtung (1) für Filtereinsätze (2) nach einem der Ansprüche 1 bis 9, **dadurch gekennzeichnet, dass** die Haltevorrichtung (1) durch Heraustrennen aus der Verpackung einer Filtereinsatzverkaufseinheit herstellbar ist.

11. Haltevorrichtung (1) für Filtereinsätze (2) nach einem der Ansprüche 1 bis 10, **dadurch gekennzeichnet, dass** die Haltevorrichtung (1) aus einer Kunststofffolie besteht, wobei die Kunststofffolie rollbar und/oder zusammenfaltbar ist.

12. Filtereinsatzverkaufseinheit (7) zur Aufnahme mehrerer Filtereinsätze (2) mit mehreren in geschlossener Konfiguration der Filtereinsatzverkaufseinheit die Filtereinsätze (2) umgebenden Wandungen,
**dadurch gekennzeichnet,**
**dass** mittels einer Perforation (8) in wenigstens einer Wandung aus der Filtereinsatzverkaufseinheit eine Haltevorrichtung (1) nach einem der Ansprüche 1 bis 11 heraustrennbar ist.

## Claims

1. Retaining device (1) for filter inserts (2), having a rear wall (3) and a retaining element (4), wherein the rear wall (3) and the retaining element (4) form a retaining opening (5), wherein the retaining opening (5) has a smaller width than the filter inserts (5) to be retained, such that at least one filter insert (2) can be inserted into the retaining opening (5), and/or the retaining element (4) is formed by a partially severed part of the rear wall (3).

2. Retaining device (1) for filter inserts (2) according to Claim 1, **characterized in that** the rear wall (3) is composed of paper, cardboard or plastic.

3. Retaining device (1) for filter inserts (2) according to Claim 2, **characterized in that** the severed part can be partially detached from the rear wall (3) along a predetermined separation line, in particular along a perforation, by the user.

4. Retaining device (1) for filter inserts (2) according to one of Claims 1 to 3, **characterized in that** the retaining element (4) is fastened on the rear wall (3) as a separate component.

5. Retaining device (1) for filter inserts (2) according to Claim 4, **characterized in that** fastening has taken place by adhesive bonding, welding or riveting.

6. Retaining device (1) for filter inserts (2) according to Claim 4 or 5, **characterized in that** the retaining element (4) is composed of paper, cardboard or plastic.

7. Retaining device (1) for filter inserts (2) according to one of Claims 1 to 6, **characterized in that** the retaining element (4) is in the form of a handle.

8. Retaining device (1) for filter inserts (2) according to Claim 7, **characterized in that** the handle is movable or flexible at least in the region of its point of connection to the rear wall (3).

9. Retaining device (1) for filter inserts (2) according to one of Claims 1 to 8, **characterized in that** the retaining device (1) has at least one adhesive strip (6), with which the retaining device (1) can be fastened on a suitable subsurface.

10. Retaining device (1) for filter inserts (2) according to one of Claims 1 to 9, **characterized in that** the retaining device (1) can be produced by being detached from the packaging of a filter-insert sales unit.

11. Retaining device (1) for filter inserts (2) according to one of Claims 1 to 10, **characterized in that** the retaining device (1) is composed of a plastic sheet material, wherein the plastic sheet material can be rolled and/or folded together.

12. Filter-insert sales unit (7) for receiving a plurality of filter inserts (2), having a plurality of walls which, in the closed configuration of the filter-insert sales unit, surround the filter inserts (2),
characterized in
that' by means of a perforation (8) in at least one wall, a retaining device (1) according to one of Claims 1 to 11 can be detached from the filter-insert sales unit.

## Revendications

1. Dispositif de retenue (1) pour inserts de filtres (2) comprenant une paroi arrière (3) et un élément de retenue (4), la paroi arrière (3) et l'élément de retenue (4) formant une ouverture de retenue (5), l'ouverture de retenue (5) présentant une plus faible largeur que les inserts de filtres à retenir (2), de telle sorte qu'au moins un insert de filtre (2) puisse être inséré dans l'ouverture de retenue (5), et en ce que l'élément de retenue (4) est formé par une partie de la paroi arrière (3) partiellement séparée.

2. Dispositif de retenue (1) pour inserts de filtres (2) selon la revendication 1, **caractérisé en ce que** la paroi arrière (3) se compose de papier, de carton ou de plastique.

3. Dispositif de retenue (1) pour inserts de filtres (2) selon la revendication 2, **caractérisé en ce que** la partie séparée peut être détachée en partie de la paroi arrière (3) le long d'une ligne destinée à la séparation, en particulier le long d'une perforation, par l'utilisateur.

4. Dispositif de retenue (1) pour inserts de filtres (2) selon l'une quelconque des revendications 1 à 3, **caractérisé en ce que** l'élément de retenue (4) est fixé à la paroi arrière (3) sous forme de composant séparé.

5. Dispositif de retenue (1) pour inserts de filtres (2) selon la revendication 4, **caractérisé en ce que** la fixation s'effectue par collage, soudage ou rivetage.

6. Dispositif de retenue (1) pour inserts de filtres (2) selon la revendication 4 ou 5, **caractérisé en ce que** l'élément de retenue (4) se compose de papier, de carton ou de plastique.

7. Dispositif de retenue (1) pour inserts de filtres (2) selon l'une quelconque des revendications 1 à 6, **caractérisé en ce que** l'élément de retenue (4) présente la forme d'un étrier.

8. Dispositif de retenue (1) pour inserts de filtres (2) selon la revendication 7, **caractérisé en ce que** l'étrier est mobile ou flexible au moins dans la région de son point de connexion à la paroi arrière (3).

9. Dispositif de retenue (1) pour inserts de filtres (2) selon l'une quelconque des revendications 1 à 8, **caractérisé en ce que** le dispositif de retenue (1) présente au moins un ruban adhésif (6) avec lequel le dispositif de retenue (1) peut être fixé à un subjectile approprié.

10. Dispositif de retenue (1) pour inserts de filtres (2) selon l'une quelconque des revendications 1 à 9, **caractérisé en ce que** le dispositif de retenue (1) peut être fabriqué par séparation de l'emballage d'une unité de vente d'inserts de filtres.

11. Dispositif de retenue (1) pour inserts de filtres (2) selon l'une quelconque des revendications 1 à 10, **caractérisé en ce que** le dispositif de retenue (1) se compose d'une feuille de plastique, la feuille de plastique pouvant être roulée et/ou pliée.

12. Unité de vente d'inserts de filtres (7) destinée à recevoir plusieurs inserts de filtres (2) avec plusieurs parois entourant les inserts de filtres (2) dans la configuration fermée de l'unité de vente d'inserts de filtres,
**caractérisée en ce**
**qu'**un dispositif de retenue (1) selon l'une quelconque des revendications 1 à 11 peut être séparé de l'unité de vente d'inserts de filtres au moyen d'une perforation (8) dans au moins une paroi.
